# EUROPÄISCHE PATENTANMELDUNG

(11) **EP 3 854 762 A1**
(43) Veröffentlichungstag der Anmeldung: **28.07.2021**
(21) Anmeldenummer: 20152829.6
(22) Anmeldetag: 21.01.2020
(51) Int. Cl.: C04B 28/04, C04B 28/12

(54) **ZUBEREITUNG, UMFASSEND EIN HYDRAULISCHES BINDEMITTEL UND EINEN CELLULOSEETHER**

(71) Anmelder: SE Tylose GmbH & Co.KG, 65203 Wiesbaden (DE)
(72) Erfinder: HAVENITH, Vanessa, 65203 Wiesbaden (DE); NEBEL, Heiko, 65203 Wiesbaden (DE)
(74) Vertreter: Weickmann & Weickmann PartmbB

(57) **Zusammenfassung**

Die Erfindung betrifft eine Zubereitung, umfassend mindestens ein hydraulisches Bindemittel und mindestens einen Celluloseether, ausgewählt aus Methylhydroxyethylhydroxypropylcellulose (MHEHPC) und deren Verwendung, insbesondere in Baustoffsystemen.

## Beschreibung

Die Erfindung betrifft eine Zubereitung umfassend mindestens ein hydraulisches Bindemittel und mindestens einen Celluloseether, ausgewählt aus Methylhydroxyethylhydroxypropylcellulose (MHEHPC), und deren Verwendung, insbesondere in hydraulische Bindemittel enthaltenden Baustoffen.

In der Bauindustrie werden zum Verbinden oder Beschichten von Bauteilen u.a. zementäre Kleber, Putze, Spachtelmassen sowie spezielle Klebe- und Armierungsspachtel für Wärmedämmverbundsysteme eingesetzt. Dabei handelt es sich um Mischungen aus einem oder mehreren Bindemitteln (z.B. Zement, hydraulischem Kalk), Füllstoffen (z.B. Sande mit verschiedenen Korngrößen) und anderen Additiven, wie Celluloseether, Dispersionspulver, Stärke, Stärkederivate, wie Stärkeether, und Luftporenbildner. Diese Baustoffe werden Werktrockenmörtel genannt, da sie werkseitig produziert und zum Verarbeiten nur noch mit Wasser angemischt werden müssen.

Die Haupteigenschaft von Celluloseethern in diesen Baustoffen ist seine Wasserretentionswirkung, um eine längere Verarbeitung sowie ein gleichmäßiges Trocknen zu gewährleisten. Vor allem in Dünnbettmörteln, wie Fliesenkleber, Spachtelmassen oder Dünnputzen, kommt diese Eigenschaft zum Tragen. Des Weiteren haben Celluloseether in Form von Methylhydroxyethylcellulose (MHEC) bzw. Methylhydroxypropylcellulose (MHPC) die Eigenschaft, Luftporen in Baustoffen einzubringen, was durch die Reduzierung der Oberflächenaktivität in Verbindung mit Wasser hervorgerufen wird. Durch den Eintrag von Luftporen ist eine leichtere Verarbeitung der Mörtel möglich. Je mehr Luftporeneintrag im Baustoffsystem vorhanden ist, umso cremiger wird der Baustoff und umso leichter wird dessen Verarbeitung, was für den Anwender eine Arbeitserleichterung darstellt. Zuviel Luft hat aber den Nachteil, dass die Festigkeit von abgebundenen Mörteln teils drastisch reduziert werden kann. Ebenfalls schwierig ist ein stabiler Luftporeneintrag im Baustoff, damit eine leichte und einfache Verarbeitung auch langfristig bestehen bleibt. Kann ein stabiler und zugleich hoher Luftporeneintrag erfolgen, wären mögliche Einsatzgebiete auch in der Wärmedämmung bzw. Schallisolierung denkbar.

Herkömmliche binäre Celluloseether wie MHEC oder MHPC gewährleisten bereits einen stabilen Luftporeneintrag und somit eine gute Verarbeitung, jedoch ist der Luftporeneintrag nicht so hoch, um eine extreme Arbeitserleichterung herbeizuführen.

Überraschenderweise zeigte sich jedoch bei Verwendung des ternären Mischethers MHEHPC in hydraulische Bindemittel enthaltenden Baustoffen ein sehr stabiler und hoher Luftporeneintrag, der mit einer Verringerung der Rohdichte des hydraulische Bindemittel enthaltenden Baustoffs einhergeht. Dies wirkt sich besonders positiv auf die Verarbeitungseigenschaften des hydraulische Bindemittel enthaltenden Baustoffs aus, ohne Festigkeitsverluste im ausgehärteten Mörtel herbeizuführen. Im Stand der Technik bekannte Baustoffzusätze zur Verringerung der Rohdichte gehen üblicherweise mit einer Verringerung der Festigkeit im ausgehärteten Mörtel einher. Mörtel bezeichnet dabei den mit Zugabewasser versetzten, hydraulische Bindemittel enthaltenden Baustoff.

Ein weiterer Vorteil von MHEHPC ist sein geringerer Einfluss auf die Hydratation von hydraulischen Bindemitteln. Die Hydratation von hydraulischen Bindemitteln beschreibt das Erhärten des hydraulische Bindemittel enthaltenden Baustoffs bei der Reaktion zwischen den Hauptbestandteilen des Baustoffs und dem Zugabewasser zu Hydratphasen. Alle Celluloseether verzögern die Hydratation je nach Höhe der Veretherung.

EP 2 058 336 A1 beschreibt MHEHPC mit spezifischem Substitutionsmuster, deren Herstellung sowie Einsatz in dispersionsgebundenen Baustoffsystemen, insbesondere in dispersionsgebundenen Farben. Die beschriebene MHEHPC zeigt eine geringe Oberflächenquellung in wässriger Dispersion, eine hohe High-Shear-Viskosität als wässrige Lösung sowie einen thermischen Flockpunkt von mindestens 65 °C in Wasser und wird deshalb als Verdicker in Dispersionsfarben eingesetzt.

Gegenstand der DE 10 2007 016 726 A1 sowie der WO 2008/122344 A1 ist die Herstellung von MHEHPC sowie deren Anwendung in gipsgebundenen Baustoffsystemen. MHEHPC verringert dabei die Klumpenbildung in diesen Baustoffsystemen und verbessert damit deren Verarbeitbarkeit.

Andere Patente wie US 3 873 518 oder DE 24 57 181 beschreiben die Herstellung von MHEHPC mit spezifischem Substitutionsmuster und deren Verwendung in dispersiongebundenen Farben. Die Cellulosederivate zeichnen sich durch eine ausgezeichnete Farbverträglichkeit und Enzymbeständigkeit aus.

EP 0 269 015 A2 beschreibt Trockenmörtelzusammensetzungen mit verbesserter Standfestigkeit, die durch eine Kombination von fein verteiltem Silica und Wasserretentionsmitteln, wie z.B. Celluloseether, erreicht wird. Dabei kommt insbesondere Methylcellulose, MHPC und MHEC zum Einsatz.

EP 0 554 751 A1 beschreibt wasserlösliche, ionische, sulfoalkylmodifizierte Cellulosederivate und deren Verwendung als Additiv für gips- und zement-basierte Baustoffsysteme. Ein verbessertes Wasserrückhaltevermögen der sulfoalkylmodifizierten Cellulosederivate gegenüber herkömmlichen Cellulosederivaten wird diskutiert.

Dem Stand der Technik sind also keine Hinweise auf die positiven Eigenschaften, die MHEHPC in hydraulische Bindemittel enthaltenden Baustoffen hervorruft, zu entnehmen.

Der vorliegenden Erfindung liegt die Aufgabe zu Grunde, ein Additiv für hydraulische Bindemittel enthaltende Baustoffen bereitzustellen, das die Verarbeitbarkeit fördert, ohne Festigkeitsverluste im ausgehärteten Baustoff herbeizuführen.

Die Aufgabe wurde gelöst durch eine Zubereitung, umfassend
(i) mindestens ein hydraulisches Bindemittel,
(ii) mindestens einen Celluloseether, ausgewählt aus Methylhydroxyethylhydroxypropylcellulose (MHEHPC),
(iii) gegebenenfalls mindestens einen Füllstoff,
(iv) gegebenenfalls mindestens ein Additiv und
(v) gegebenenfalls Wasser.

Ein hydraulisches Bindemittel ist bevorzugt ein anorganischer, nichtmetallischer Stoff, der nach dem Anmachen mit Wasser infolge chemischer Reaktionen mit dem Anmachwasser selbständig erhärtet und nach dem Erhärten auch unter Wasser fest und raumbeständig bleibt.

Komponente (i) der erfindungsgemäßen Zubereitung ist bevorzugt ausgewählt aus Zement und hydraulischem Kalk, insbesondere Zement.

Die erfindungsgemäße Zubereitung umfasst bevorzugt
(i) mindestens einen Zement,
(ii) mindestens einen Celluloseether, ausgewählt aus Methylhydroxyethylhydroxypropylcellulose (MHEHPC),
(iii) gegebenenfalls mindestens einen Füllstoff,
(iv) gegebenenfalls mindestens ein Additiv und
(v) gegebenenfalls Wasser.

Bevorzugt ist der mindestens eine Zement ausgewählt aus der Gruppe, bestehend aus CEM I, CEM II/A-S, CEM II/B-S, CEM II/A-D, CEM II/A-P, CEM II/B-P, CEM II/A-Q, CEM II/B-Q, CEM II/A-V, CEM II/B-V, CEM II/A-W, CEM II/B-W, CEM II/A-T, CEM II/B-T, CEM II/A-L, CEM II/B-L, CEM II/A-LL, CEM II/B-LL, CEM II/A-M, CEM II/B-M, CEM III/A, CEM III/B, CEM III/C, CEM IV/A, CEM IV/B, CEM V/A und/oder CEM V/B. Gemäß DIN EN 197-1 ist CEM I Portlandzement, zählen CEM II/A-S und CEM II/B-S zum Portlandhüttenzement, ist CEM II/A-D Portlandsilicastaubzement, zählen CEM II/A-P, CEM II/B-P, CEM II/A-Q und CEM II/B-Q zum Portlandpuzzolanzement, CEM II/A-V, CEM II/B-V, CEM II/A-W und CEM II/B-W zum Portlandflugaschezement, CEM II/A-T und CEM II/B-T zum Portlandschieferzement, CEM II/A-L, CEM II/B-L, CEM II/A-LL und CEM II/B-LL zum Portlandsteinzement, CEM II/A-M und CEM II/B-M zum Portlandkompositzement, CEM III/A, CEM III/B und CEM III/C zum Hochofenzement, CEM IV/A und CEM IV/B zum Puzzolanzement sowie CEM V/A und CEM V/B zum Kompositzement. Bevorzugt weist der Zement eine Festigkeitsklasse nach DIN EN 197-1 von 32,5, 42,5 oder 52,5 auf. Bevorzugt hat der Zement gemäß DIN EN 197-1 eine Anfangsfestigkeit N, R oder L. Eine Anfangsfestigkeit N beschreibt eine übliche Anfangsfestigkeit, R eine hohe Anfangsfestigkeit und L eine niedrige Anfangsfestigkeit. Während die Festigkeitsklasse die Festigkeit nach 28 Tagen angibt, erfolgt über die Anfangsfestigkeit eine ergänzende Klassifizierung, die die Festigkeit in der frühen Phase der Erhärtung nach 2 bzw. 7 Tagen beschreibt. Zemente mit niedrigerer Hydratationswärme können zusätzlich die Kennzeichnung LH, Zemente mit hohem Sulfatwiderstand die Kennzeichnung SR erhalten.

In einer weiteren Ausführungsform umfasst der hydraulische Kalk bevorzugt CaO. Hydraulischer Kalk ist in DIN EN 459-1 beschrieben und erhärtet in Gegenwart von Wasser durch Hydratbildung.

Bevorzugt beträgt der Anteil der Komponente (i) 10 - 80 Gew.-%, bezogen auf die Gesamtmasse der Komponenten (i), (ii), gegebenenfalls (iii) und gegebenenfalls (iv).

In einer bevorzugten Ausführungsform weist der mindestens eine Celluloseether, ausgewählt aus Methylhydroxyethylhydroxypropylcellulose (MHEHPC), einen durchschnittlichen Substitutionsgrad DS_{Methyl} von 1,2-2,35, bevorzugt 1,5-2,25, besonders bevorzugt 1,7-2,15 und ganz besonders bevorzugt 1,75-2,0 auf. Bevorzugt wird der DS_{Methyl} so gewählt, dass das Cellulosederivat bei 20 °C wasserlöslich ist. Bevorzugt weist MHEHPC eine Wasserlöslichkeit von mindestens 2 g/L Wasser bei 20 °C auf.

Bevorzugt weist der mindestens eine Celluloseether, ausgewählt aus Methylhydroxyethylhydroxypropylcellulose (MHEHPC), einen molekularen Substitutionsgrad MS_{Hydroxyethyl} von 0,1 bis 0,99, bevorzugt 0,15 bis 0,8, besonders bevorzugt 0,25-0,6, ganz besonders bevorzugt 0,2-0,5 auf.

Bevorzugt weist der mindestens eine Celluloseether, ausgewählt aus Methylhydroxyethylhydroxypropylcellulose (MHEHPC), einen molekularen Substitutionsgrad MS_{Hydroxypropyl} von 0,1 bis 0,99, bevorzugt 0,15 bis 0,8, besonders bevorzugt 0,25-0,6, ganz besonders bevorzugt 0,3-0,5 auf.

Besonders bevorzugt wird der mindestens eine Celluloseether, ausgewählt aus Methylhydroxyethylhydroxypropylcellulose (MHEHPC), der einen durchschnittlichen Substitutionsgrad DS_{Methyl} von 1,2-2,35, bevorzugt 1,5-2,25, besonders bevorzugt 1,7-2,15, ganz besonders bevorzugt 1,75-2,0, einen molekularen Substitutionsgrad MS_{Hydroxyethyl} von 0,1 bis 0,99, bevorzugt 0,15 bis 0,8, besonders bevorzugt 0,25-0,6, ganz besonders bevorzugt 0,2-0,5, und einen molekularen Substitutionsgrad MS_{Hydroxypropyl} von 0,1 bis 0,99, bevorzugt 0,15 bis 0,8, besonders bevorzugt 0,25-0,6, ganz besonders bevorzugt 0,3-0,5 aufweist.

Bevorzugt beträgt der gesamte molekulare Substitutionsgrad MS_{Hydroxyethyl-Hydroxypropyl} 1,1, bevorzugt 0,9, besonders bevorzugt 0,75, ganz besonders bevorzugt 0,6.

Der durchschnittliche Substitutionsgrad DS sowie der molekulare Substitutionsgrad MS werden durch die dem Fachmann bekannte Zeisel-Methode bestimmt (Literatur: G. Bartelmus und R. Ketterer, Z. Anal. Chem. 286 (1977) 161-190).

In einer bevorzugten Ausführungsform beträgt der gewichtsmittlere Polymerisationsgrad DPw der MHEHPC 1 bis 6000, bevorzugt 1 bis 5000. Der gewichtsmittlere Polymerisationsgrad wird gemessen nach Pulps gemäß ISO 5351:2010 - *"Determination of Limiting Viscosity Number in Cupriethylenediamine (CED) Solution".*

Bevorzugt ist eine Viskosität der MHEHPC von 1 bis 70.000 mPa s, bevorzugt 100 bis 15.000 mPa s, stärker bevorzugt 1000 bis 12.000 mPa s. Die Viskositätsmessung erfolgt gemäß DIN 53015:2019-06 - "Viskosimetrie - Messung der Viskosität mit dem Kugelfallviskosimeter nach Höppler". Die Messung erfolgt in wässrigen Lösungen der MHEHPC mit 1,9 Gew.-% der Komponente (ii) bezogen auf das Gesamtgewicht der Lösung bei 20 °C und 20 °dH.

In einer Ausführungsform beträgt der Anteil der Komponente (ii) bevorzugt 0,05 - 0,6 Gew.-%, bevorzugt 0,1 - 0,5 Gew.-%, ganz besonders bevorzugt 0,3 - 0,4 Gew.-% bezogen auf die Gesamtmasse der Komponenten (i) und (ii).

Die Zubereitung kann ferner mindestens einen Füllstoff als Komponente (iii) enthalten, wobei der Füllstoff bevorzugt ausgewählt ist aus Kies, Quarzsand, Kalksteinmehl, Leichtzuschlagstoffen und/oder synthetischen Füllstoffen.

Der Füllstoff weist bevorzugt eine durchschnittliche Partikelgröße d₅₀ von 0 - 3 mm, bevorzugt 0 - 0,7 mm auf. Die Bestimmung des d₅₀-Werts kann mit dem Fachmann bekannten Methoden, z.B. mit Laserbeugung, Siebung, etc., erfolgen. Bei der Lasergranulometrie wird der Füllstoff beispielsweise in einem flüssigen oder gasförmigen Medium dispergiert. Die Bestimmung der Korngrößenverteilung erfolgt anschließend auf Basis der Beugung eines auf das Probenmedium gerichteten Laserstrahls. Der d₅₀-Wert bedeutet, dass 50 % der Teilchen kleiner sind als der angegebene Wert.

Bevorzugt beträgt der Anteil der Komponente (iii) 5 - 85 Gew.-%, besonders bevorzugt 35 - 70 Gew.-% bezogen auf das Gesamtgewicht der Komponenten (i), (ii), (iii) und gegebenenfalls (iv).

Die Zubereitung kann ferner mindestens ein Additiv als Komponente (iv) enthalten. In einer Ausführungsform kann das Additiv bevorzugt ein Dispersionspulver, ein anorganischer Verdicker, ein Härtungsbeschleuninger, ein Abbindeverzögerer, ein Polymer, ein Entschäumer, ein Luftporenbildner, ein Fließmittel, ein Hydrophobierungsmittel und/oder Fasern sein. Bevorzugt ist das Additiv ein Dispersionspulver. Bevorzugt beträgt der Anteil der Komponente (iv) 0 - 12 Gew.-%, besonders bevorzugt 1 - 5 Gew.-%, bezogen auf die Gesamtmasse der Komponenten (i), (ii), (iv) und gegebenenfalls (iii).

Die Zubereitung kann Wasser als Komponente (v) enthalten. In einer bevorzugten Ausführungsform beträgt der Anteil der Komponente (v) 18 - 32 Gew.-%, bevorzugt 22 - 28 Gew.-%, bezogen auf die Gesamtmasse der Komponenten (i) und (v). Erfindungsgemäße Zubereitungen, umfassend die Komponenten (i) bis (iv), können durch Zusatz von Wasser als Komponente (v) in einer Hydratationsreaktion erhärten. Das mindestens eine hydraulische Bindemittel kann mit Wasser unter Bildung unlöslicher, stabiler Verbindungen reagieren. Die Verbindungen können Kristalle ausbilden, die sich untereinander verzahnen und so zur hohen Festigkeit des ausgehärteten Baustoffsystems führen. Diese Verbindungen können Hydrate, Silikathydrate und/oder Alumosilikathydrate umfassen.

In einer bevorzugten Ausführungsform ist die Zubereitung formuliert als Trockenmörtel, Fliesenkleber, ein Putzsystem, eine Spachtelmasse, eine Fugenmasse und/oder ein Mauermörtel. Die Zubereitung kann dabei neben den Komponenten (i) bis (v) noch weitere, dem Fachmann bekannte Hilfsmittel enthalten.

In einem weiteren Aspekt betrifft die Erfindung auch die Verwendung mindestens eines Celluloseethers, ausgewählt aus Methylhydroxyethylhydroxypropylcellulose (MHEHPC), als Zusatz zu einer Formulierung, umfassend mindestens ein hydraulisches Bindemittel wie oben definiert. Üblicherweise wird der Celluloseether durch einfaches Mischen im trockenen Zustand den trockenen Komponenten (i) und gegebenenfalls (iii) und gegebenenfalls (iv) beigemengt. Die Formulierung ist bevorzugt ausgewählt aus hydraulischen Mörtelsystemen, insbesondere zementären Mörtelsystemen, insbesondere für Fliesenkleber, Putzsysteme, Spachtelmassen, Fugenmassen und/oder Mauermörtel.

Der Celluloseether kann dem mindestens einen hydraulischen Bindemittel zu 0,05-0,6 Gew.-%, bevorzugt 0,1-0,5 Gew.-% bezogen auf die Gesamtmasse von Celluloseether und hydraulischem Bindemittel der Formulierung zugesetzt werden.

Die erfindungsgemäßen Zubereitungen lassen sich überraschenderweise besser verarbeiten als die Systeme des Standes der Technik. Bevorzugt weisen die Zubereitungen eine verbesserte Luftporenbildung und besonders bevorzugt eine geringere Rohdichte auf. Ohne an eine Theorie gebunden zu sein, reichert sich der Celluloseether aufgrund seiner Amphiphilie an den Grenzflächen zwischen Luftblasen und der wässrigen Phase des Baustoffs an (Jenni et al. 2004) und fördert damit den Luftporeneintrag in den Baustoff.

In einer weiteren Ausführungsform ist die Erfindung daher gerichtet auf eine Verwendung von mindestens einem Celluloseether, ausgewählt aus Methylhydroxyethylhydroxypropylcellulose (MHEHPC), zur Verringerung der Rohdichte der Zubereitung und/oder Verbesserung der Verarbeitbarkeit.

Die vorliegende Erfindung wird anhand von Beispielen illustriert, aber nicht darauf beschränkt:

### Beispiele:

### Zusammensetzung der Fliesenklebermischungen:

Im Folgenden sind Prozente als Gewichtsprozent zu verstehen, soweit nicht anders angegeben oder aus dem Zusammenhang ersichtlich. "atro" steht für "absolut trocken".

Zur Herstellung der unterschiedlichen Fliesenklebermischungen (nachfolgend als **FK** bezeichnet) werden folgende Celluloseether (nachfolgend als **CE** bezeichnet) mit den angegebenen Spezifikationen eingesetzt:
**CE1:**
   - Tylose MHEHPC - Methylhydroxyethylhydroxypropylcellulose
   - DS_{Methyl} 1,8; MS_{Hydroxyethyl} 0,4; MS_{Hydroxypropyl} 0,4
   - Viskosität 12000 - 18000 mPa s (1,9 % atro, 20 °C, 20 °dH, Brookfield RV, Spindel 5)
   - Feinpulver (Luftstrahlsieb, < 0,125 mm: 95 %, < 0,063 mm: 50 %)
**CE2:**
   - Tylose MHF 15000 P4 - Methylhydroxyethylcellulose
   - DS_{Methyl} 1,7; MS_{Hydroxyethyl} 0,2
   - Viskosität 11000 - 15000 mPa s (1,9 % atro, 20 °C, 20 °dH, Brookfield RV, Spindel 5)
   - Feinpulver (Luftstrahlsieb, < 0,125 mm: 90%, < 0,100 mm: 70%)
**CE 3:**
   - Tylose MHEHPC - Methylhydroxyethylhydroxypropylcellulose (modifiziert mit Polyacrylamid und Stärkeether)
   - DS_{Methyl} 1,8; MS_{Hydroxyethyl} 0,4; MS_{Hydroxypropyl} 0,4
   - Viskosität 12000 - 18000 mPa s (1,9 % atro, 20 °C, 20 °dH, Brookfield RV, Spindel 5)
**CE 4:**
   - Tylose MHF 20010 P4 - Methylhydroxyethylcellulose (modifiziert mit Polyacrylamid und Stärkeether)
   - DS_{Methyl} 1,7; MS_{Hydroxyethyl} 0,2
   - Viskosität 16000 - 21000 mPa s (1,9 % atro, 20 °C, 20 °dH, Brookfield RV, Spindel 5)

Die Celluloseether **CE 3** und **CE 4** enthalten geringe Mengen an Polyacrylamid und Stärkeether, die durch physikalische Mischung zugesetzt werden.

Die Zusammensetzung der Fliesenklebermischungen sind nachfolgender Tabelle zu entnehmen. Die Zahlenangaben repräsentieren Gewichtsteile der einzelnen Bestandteile in der Fliesenklebermischung.

Der Wassergehalt musste aufgrund der Additive in **CE 3** und **CE 4** von 26 Gewichtsteilen auf 28 Gewichtsteile angehoben werden.

### Prüfrezepturen

**Tabelle 1: Zusammensetzungen der Prüfmischungen (Gewichtsteile).**

| Prüfmischung | FK 1 | FK 2 | FK 3 | FK 4 |
|---|---|---|---|---|
| Zement CEM I 52,5 N | 38 | 38 | 38 | 38 |
| Kalksteinmehl 0,1 mm | 5 | 5 | 5 | 5 |
| Quarzsand 0,1 - 0,5 mm | 57 | 57 | 57 | 57 |
| Dispersionspulver | | | 1 | 1 |
| CE 1 | 0,4 | | | |
| CE 2 | | 0,4 | | |
| CE 3 | | | 0,4 | |
| CE 4 | | | | 0,4 |
| Wasser | 26 | 26 | 28 | 28 |

Folgende Tabelle zeigt die Frischmörtelrohdichten der verschiedenen Fliesenkleberzusammensetzungen.

**Tabelle 2: Frischmörtelrohdichten in kg/L der verschiedenen Prüfrezepturen.**

| **Frischmörtelrohdichte gemessen:** | **FK 1** | **FK 2** | **FK 3** | **FK 4** |
|---|---|---|---|---|
| **direkt** | 1,31 | 1,40 | 1,35 | 1,49 |
| **nach 30 min** | 1,34 | 1,42 | 1,38 | 1,53 |
| **nach 60 min** | 1,36 | 1,44 | 1,41 | 1,54 |

Die Frischmörtelrohdichte wurde direkt, nach 30 min und 60 min Ruhezeit gemessen. Aus Tabelle 2 geht eindeutig die geringere Frischmörtelrohdichte der Prüfmischung mit MHEHPC **(FK 1)** im Vergleich zur Prüfmischung mit Tylose MHF 15000 P4 **(FK 2)** hervor. Auch nach Zusatz von Additiven führt MHEHPC zu geringeren Frischmörteldichten der Prüfmischung **(FK 3)** als Tylose MHF 20010 P4 **(FK 4).** Damit einher geht eine sehr leichte Verarbeitbarkeit mit mousseartiger Konsistenz der MHEHPC enthaltenden Fliesenkleberzusammensetzungen.

### Prüfmethoden für Fliesenkleber

Die in Tabelle 1 beschriebenen Fliesenkleber wurden mit Wasser zu einem Mörtel angerührt, wobei 100 Gewichtsteile der beschriebenen Rezepturen mit 26 Gewichtsteilen Anmachwasser für die Versuche mit **CE 1** und **CE 2** und mit 28 Gewichtsteilen Anmachwasser für die Versuche mit **CE 3** und **CE 4** versetzt wurden.

Zunächst wurde die Mischungen 30 Sekunden auf niedrigster Stufe gerührt, anschließend 1 Minute reifen gelassen, wiederum 1 Minute gerührt, 5 Minuten reifen gelassen und zuletzt nochmals 15 Sekunden auf niedriger Stufe geschert. Anschließend wurde der Mörtel auf eine Betonplatte mittels Zahnkelle appliziert (nach ISO 13007). Die Benetzung wurde gemessen, indem in das Mörtelbett nach 10, 15, 20, 25 und 30 Minuten nach Auftragen des Mörtels (benetzungsoffene Zeit) Steingutfliesen (5 x 5 cm) eingelegt, 30 Sekunden lang mit 2 kg beschwert und dann aus dem Mörtelbett aufgenommen wurden. Tabelle 3 zeigt die Benetzungsergebnisse.

**Tabelle 3: Benetzung der Fliesenrückseite in % nach DIN EN 12004 der verschiedenen Prüfrezepturen.**

| **benetzungsoffene Zeit** | **FK 1** | **FK 2** | **FK 3** | **FK 4** |
|---|---|---|---|---|
| **nach 10 min** | 90 | 60 | 90 | 90 |
| **nach 15 min** | 80 | 50 | 90 | 80 |
| **nach 20 min** | 60 | 30 | 80 | 70 |
| **nach 25 min** | 50 | 10 | 70 | 60 |
| **nach 30 min** | 10 | | 60 | 40 |

Der Benetzungsgrad von **FK 1** bzw. **FK3** ist höher als der Benetzungsgrad von **FK 2** bzw. **FK4.** MHEHPC führt also zu einer etwas besseren Benetzung als MHEC.

Der Benetzungsgrad von **FK1** bzw. **FK 2** ist geringer als der Benetzungsgrad von **FK3** bzw. **FK 4**. Der Zusatz des Dispersionspulvers und der Additive führt somit zu einer Verbesserung der Benetzung.

Die Haftfestigkeit nach einer bestimmten offenen Zeit für Fliesenkleber wird bestimmt nach DIN EN 12004, indem auf eine definierte Betonplatte (hier Solana) der Fliesenkleber mittels Zahnkelle aufgezogen wird. Nach 10, 20 und 30 Minuten offener Zeit nach Auftragen des Mörtels werden 4 - 8 Steingutfliesen pro Zeiteinheit in das Mörtelbett gelegt und mit einem 2 kg-Gewicht 30 Sekunden lang beschwert. Die Steingutfliesen werden im Anschluss für 28 Tage bei Normklima (23°C und 50% Luftfeuchte) gelagert. Nach der Lagerung erfolgt die Ermittlung der Haftzugwerte, bei dem die Fliesen mittels Haftzugprüfgerät (Herion) von der Betonplatte gerissen werden. Die ermittelten Werte sind in Tabelle 4 aufgelistet.

Die Haftfestigkeit bei verschiedenen Lagerarten nach DIN EN 12004 wurden ebenfalls ermittelt. Die in Tabelle 4 aufgelisteten Werte stellen die Haftzugwerte nach Trockenlagerung bzw. Normlagerung (28 Tage bei 23°C und 50% Luftfeuchte), Warmlagerung (14 Tage Normklima, 14 Tage bei 70°C) und Wasserlagerung (1 Woche Normklima, drei Wochen in normtemperiertem Wasser) dar.

**Tabelle 4: Haftfestigkeiten in N/mm² nach DIN EN 12004 der verschiedenen Prüfrezepturen.**

| | **FK 1** | **FK 2** | **FK 3** | **FK 4** |
|---|---|---|---|---|
| **Offene Zeit nach ISO 12004** | | | | |
| **10 min** | 0,96 | 0,81 | 0,90 | 1,16 |
| **20 min** | 0,51 | 0,51 | 0,97 | 0,94 |
| **30 min** | 0,17 | 0,26 | 0,79 | 0,53 |

| **Lagerarten nach DIN EN 12004** | | | | |
|---|---|---|---|---|
| **Norm** | 1,29 | 1,03 | 0,68 | 0,66 |
| **Wasser** | 1,05 | 1,19 | 1,00 | 0,79 |
| **Warm** | 1,05 | 0,94 | 0,56 | 0,53 |
| **Frost/Tau** | 1,45 | 1,54 | 0,85 | 0,61 |

Die Haftfestigkeiten der Prüfmischung **FK 1** und **FK 2** bezogen auf die offene Zeit sind unter Einbeziehung der Fehlertoleranz von ± 0,2 N/mm² vergleichbar. Der Einsatz von **CE 1** (MHEHPC) und **CE 2** (MHEC) in den Prüfmischungen führt deshalb zu vergleichbaren Haftfestigkeiten. Durch den Zusatz von Dispersionspulver und Additiven sind die Haftfestigkeiten bezogen auf die offene Zeit insgesamt höher. **FK 3** (MHEHPC) übersteigt nach 30 Minuten offener Zeit sogar die Haftfestigkeit von **FK 4** (MHEC).

Im Hinblick auf die unterschiedlichen Lagerarten zeigen sich für **FK 1** und **FK 2** unter Einbeziehung der Fehlertoleranz von ± 0,2 N/mm² wieder keine signifikanten Unterschiede der Haftfestigkeit. Gleiches gilt nach Zusatz des Dispersionspulvers und der Additive für **FK 3** und **FK 4,** wobei für die Prüfmischung mit MHEHPC selbst unter Einbeziehung der Fehlertoleranz insgesamt höhere Haftfestigkeiten erreicht werden.

### Schlussfolgerung:

Durch die Verwendung von MHEHPC kann die Rohmörteldichte verringert und deshalb eine leichte und mousseartige Konsistenz erzielt werden, die die Verarbeitung von hydraulisch abbindenden Baustoffen erleichtert. Dies ist umso erstaunlicher, als die Haftfestigkeitswerte vergleichbar mit denen des Standes der Technik sind.

Die vorliegende Erfindung umfasst folgende Ausführungsformen:
1. Zubereitung, umfassend
   (i) mindestens ein hydraulisches Bindemittel,
   (ii) mindestens einen Celluloseether, ausgewählt aus Methylhydroxyethylhydroxypropylcellulose (MHEHPC),
   (iii) gegebenenfalls mindestens einen Füllstoff,
   (iv) gegebenenfalls mindestens ein Additiv und
   (v) gegebenenfalls Wasser.
2. Zubereitung nach Punkt 1, wobei das hydraulische Bindemittel ausgewählt ist aus Zement und hydraulischem Kalk, bevorzugt Zement.
3. Zubereitung nach Punkt 2, wobei der Zement ausgewählt ist aus der Gruppe, bestehend aus CEM I, CEM II/A-S, CEM II/B-S, CEM II/A-D, CEM II/A-P, CEM II/B-P, CEM II/A-Q, CEM II/B-Q, CEM II/A-V, CEM II/B-V, CEM II/A-W, CEM II/B-W, CEM II/A-T, CEM II/B-T, CEM II/A-L, CEM II/B-L, CEM II/A-LL, CEM II/B-LL, CEM II/A-M, CEM II/B-M, CEM III/A, CEM III/B, CEM III/C, CEM IV/A, CEM IV/B, CEM V/A und/oder CEM V/B.
4. Zubereitung nach Punkt 3, wobei der Zement eine Festigkeitsklasse nach DIN EN 197-1 von 32,5, 42,5 oder 52,5 aufweist.
5. Zubereitung nach Punkt 3 oder 4, wobei der Zement eine Anfangsfestigkeit nach DIN EN 197-1 von N, R oder L aufweist.
6. Zubereitung nach Punkt 2, wobei der hydraulische Kalk CaO umfasst.
7. Zubereitung nach einem der Punkte 1-7, wobei der mindestens eine Celluloseether, ausgewählt aus Methylhydroxyethylhydroxypropylcellulose (MHEHPC), einen durchschnittlichen Substitutionsgrad DS_{Methyl} von 1,2-2,35, bevorzugt 1,5-2,25, besonders bevorzugt 1,7-2,15, ganz besonders bevorzugt 1,75-2,0 aufweist.
8. Zubereitung nach einem der Punkte 1-7, wobei der mindestens eine Celluloseether, ausgewählt aus Methylhydroxyethylhydroxypropylcellulose (MHEHPC), einen molekularen Substitutionsgrad MS_{Hydroxyethyl} von 0,1 bis 0,99, bevorzugt 0,15 bis 0,8, besonders bevorzugt 0,25-0,6, ganz besonders bevorzugt 0,2-0,5 aufweist.
9. Zubereitung nach einem der Punkte 1-8, wobei der mindestens eine Celluloseether, ausgewählt aus Methylhydroxyethylhydroxypropylcellulose (MHEHPC), einen molekularen Substitutionsgrad MS_{Hydroxypropyl} von 0,1 bis 0,99, bevorzugt 0,15 bis 0,8, besonders bevorzugt 0,25-0,6, ganz besonders bevorzugt 0,3-0,5 aufweist.
10.Zubereitung nach einem der Punkte 1-10, wobei der mindestens eine Celluloseether, ausgewählt aus Methylhydroxyethylhydroxypropylcellulose (MHEHPC), einen durchschnittlichen Substitutionsgrad DS_{Methyl} von 1,2-2,35, bevorzugt 1,5-2,25, besonders bevorzugt 1,7-2,15, ganz besonders bevorzugt 1,75-2,0, einen molekularen Substitutionsgrad MS_{Hydroxyethyl} von 0,1 bis 0,99, bevorzugt 0,15 bis 0,8, besonders bevorzugt 0,25-0,6, ganz besonders bevorzugt 0,2-0,5, und einen molekularen Substitutionsgrad MS_{Hydroxypropyl} von 0,1 bis 0,99, bevorzugt 0,15 bis 0,8, besonders bevorzugt 0,25-0,6, ganz besonders bevorzugt 0,3-0,5 aufweist.
11.Zubereitung nach einem der vorhergehenden Punkte, wobei der mindestens eine Celluloseether, ausgewählt aus Methylhydroxyethylhydroxypropylcellulose (MHEHPC), einen gewichtsmittleren Polymerisationsgrad (DPw) von 1 bis 6000, bevorzugt 1 bis 5000, gemessen nach ISO 5351:2010, aufweist.
12.Zubereitung nach einem der vorhergehenden Punkte, wobei der mindestens eine Celluloseether, ausgewählt aus Methylhydroxyethylhydroxypropylcellulose (MHEHPC), eine Wasserlöslichkeit von mindestens 2 g/L Wasser bei 20 °C aufweist.
13.Zubereitung nach einem der vorhergehenden Punkte, wobei Komponente (ii) eine Viskosität von 1 bis 70.000 mPa s, bevorzugt 100 bis 15.000 mPa s, stärker bevorzugt 1000 bis 12.000 mPa s aufweist (nach DIN 53015:2019-06; gemessen in einer wässrigen Lösung mit 1,9 Gew.-% Komponente (ii) bezogen auf das Gesamtgewicht der Lösung bei 20 °C und 20 °dH).
14.Zubereitung nach einem der vorhergehenden Punkte, wobei der Anteil der Komponente (ii) 0,05 - 0,6 Gew.-%, bevorzugt 0,1 - 0,5 Gew.-%, ganz besonders bevorzugt 0,3 - 0,4 Gew.-% bezogen auf die Gesamtmasse der Komponenten (i) und (ii) ist.
15.Zubereitung nach einem der vorhergehenden Punkte, wobei der mindestens eine Füllstoff ausgewählt ist aus Kies, Quarzsand, Kalksteinmehl und/oder synthetischen Füllstoffen.
16.Zubereitung nach einem der vorhergehenden Punkte, wobei der mindestens eine Füllstoff eine durchschnittliche Partikelgröße d₅₀ von 0 - 3 mm aufweist.
17.Zubereitung nach einem der vorhergehenden Punkte, wobei der Anteil der Komponente (iii) 5 - 85 Gew.-%, bevorzugt 35 - 70 Gew.-% bezogen auf das Gesamtgewicht der Komponenten (i), (ii), (iii) und gegebenenfalls (iv) beträgt.
18.Zubereitung nach einem der vorhergehenden Punkte, wobei das mindestens eine Additiv ausgewählt ist aus Dispersionspulver, anorganischer Verdicker, Härtungsbeschleuninger, Abbindeverzögerer, Polymer, Entschäumer, Luftporenbildner, Fließmittel, Hydrophobierungsmittel und/oder Fasern.
19.Zubereitung nach einem der vorhergehenden Punkte, wobei der Anteil der Komponente (iv) 0 - 12 Gew.-%, bevorzugt 1 - 5 Gew.-%, bezogen auf die Gesamtmasse der Komponenten (i), (ii), (iv) ist.
20.Zubereitung nach einem der vorhergehenden Punkte, wobei der Anteil der Komponente (v) 18 - 32 Gew.-%, bevorzugt 22 - 28 Gew.-%, bezogen auf die Gesamtmasse der Komponenten (i) und (v) ist.
21.Zubereitung nach einem der vorhergehenden Punkte, wobei die Zubereitung ein Trockenmörtel, Fliesenkleber, ein Putzsystem, eine Spachtelmasse, eine Fugenmasse und/oder ein Mauermörtel ist.
22.Verwendung mindestens eines Celluloseethers, ausgewählt aus Methylhydroxyethylhydroxypropylcellulose (MHEHPC), als Zusatz zu einer Formulierung, umfassend mindestens ein hydraulisches Bindemittel.
23.Verwendung nach Punkt 22, wobei die Formulierung ausgewählt ist aus hydraulischen Mörtelsystemen, insbesondere zementären Mörtelsystemen, insbesondere für Fliesenkleber, Putzsysteme, Spachtelmassen, Fugenmassen und/oder Mauermörtel.
24.Verwendung nach einem der Punkte 22 oder 23 zur Verringerung der Rohdichte der Formulierung und/oder Verbesserung der Verarbeitbarkeit.

## Patentansprüche

1. Zubereitung, umfassend
(i) mindestens ein hydraulisches Bindemittel,
(ii) mindestens einen Celluloseether, ausgewählt aus Methylhydroxyethylhydroxypropylcellulose (MHEHPC),
(iii) gegebenenfalls mindestens einen Füllstoff,
(iv) gegebenenfalls mindestens ein Additiv und
(v) gegebenenfalls Wasser.

2. Zubereitung nach Anspruch 1, wobei das hydraulische Bindemittel ausgewählt ist aus Zement und hydraulischem Kalk, z.B. CaO, bevorzugt Zement.

3. Zubereitung nach einem der vorhergehenden Ansprüche, wobei die Methylhydroxyethylhydroxypropylcellulose (MHEHPC) einen durchschnittlichen Substitutionsgrad DS_{Methyl} von 1,2-2,35, bevorzugt 1,5-2,25, besonders bevorzugt 1,7-2,15, ganz besonders bevorzugt 1,75-2,0 aufweist; und/oder
wobei der mindestens eine Celluloseether, ausgewählt aus Methylhydroxyethylhydroxypropylcellulose (MHEHPC), einen molekularen Substitutionsgrad MS_{Hydroxyethyl} von 0,1 bis 0,99, bevorzugt 0,15 bis 0,8, besonders bevorzugt 0,25-0,6, ganz besonders bevorzugt 0,2-0,5 aufweist; und/oder
wobei der mindestens eine Celluloseether, ausgewählt aus Methylhydroxyethylhydroxypropylcellulose (MHEHPC), einen molekularen Substitutionsgrad MS_{Hydroxypropyl} von 0,1 bis 0,99, bevorzugt 0,15 bis 0,8, besonders bevorzugt 0,25-0,6, ganz besonders bevorzugt 0,3-0,5 aufweist.

4. Zubereitung nach nach einem der vorhergehenden Ansprüche, wobei der mindestens eine Celluloseether, ausgewählt aus Methylhydroxyethylhydroxypropylcellulose (MHEHPC), einen durchschnittlichen Substitutionsgrad DS_{Methyl} von 1,2-2,35, bevorzugt 1,5-2,25, besonders bevorzugt 1,7-2,15, ganz besonders bevorzugt 1,75-2,0, einen molekularen Substitutionsgrad MS_{Hydroxyethyl} von 0,1 bis 0,99, bevorzugt 0,15 bis 0,8, besonders bevorzugt 0,25-0,6, ganz besonders bevorzugt 0,2-0,5, und einen molekularen Substitutionsgrad MS_{Hydroxypropyl} von 0,1 bis 0,99, bevorzugt 0,15 bis 0,8, besonders bevorzugt 0,25-0,6, ganz besonders bevorzugt 0,3-0,5 aufweist.

5. Zubereitung nach einem der vorhergehenden Ansprüche, wobei der mindestens eine Celluloseether, ausgewählt aus Methylhydroxyethylhydroxypropylcellulose (MHEHPC), eine Wasserlöslichkeit von mindestens 2 g/L Wasser bei 20 °C aufweist.

6. Zubereitung nach einem der vorhergehenden Ansprüche, wobei der Anteil der Komponente (ii) 0,05 - 0,6 Gew.-%, bevorzugt 0,1 - 0,5 Gew.-%, ganz besonders bevorzugt 0,3 - 0,4 Gew.-% bezogen auf die Gesamtmasse der Komponenten (i) und (ii) ist.

7. Zubereitung nach einem der vorhergehenden Ansprüche, wobei der mindestens ein Füllstoff ausgewählt ist aus Kies, Quarzsand, Kalksteinmehl und/oder synthetischen Füllstoffen.

8. Zubereitung nach einem der vorhergehenden Ansprüche, wobei der Anteil der Komponente (iii) bevorzugt 35 - 70 Gew.-% bezogen auf das Gesamtgewicht der Komponenten (i), (ii), (iii) und gegebenenfalls (iv) beträgt.

9. Zubereitung nach einem der vorhergehenden Ansprüche, wobei das mindestens eine Additiv ausgewählt ist aus Dispersionspulver, anorganischer Verdicker, Härtungsbeschleuninger, Abbindeverzögerer, Polymer, Entschäumer, Luftporenbildner, Fließmittel, Hydrophobierungsmittel und/oder Fasern.

10. Zubereitung nach einem der vorhergehenden Ansprüche, wobei der Anteil der Komponente (iv) bevorzugt 1 - 5 Gew.-% bezogen auf die Gesamtmasse der Komponenten (i), (ii), (iv) und gegebenenfalls (iii) ist.

11. Zubereitung nach einem der vorhergehenden Ansprüche, wobei der Anteil der Komponente (v) 18 - 32 Gew.-%, bevorzugt 22 - 28 Gew.-%, bezogen auf die Gesamtmasse der Komponenten (i) und (v) ist.

12. Zubereitung nach einem der vorhergehenden Ansprüche, wobei die Zubereitung ein Trockenmörtel, Fliesenkleber, ein Putzsystem, eine Spachtelmasse, eine Fugenmasse und/oder ein Mauermörtel ist.

13. Verwendung mindestens eines Celluloseethers, ausgewählt aus Methylhydroxyethylhydroxypropylcellulose (MHEHPC), als Zusatz zu einer Formulierung, umfassend mindestens ein hydraulisches Bindemittel.

14. Verwendung nach Anspruch 13, wobei die Formulierung ausgewählt ist aus hydraulischen Mörtelsystemen, insbesondere zementären Mörtelsystemen, insbesondere für Fliesenkleber, Putzsysteme, Spachtelmassen, Fugenmassen und/oder Mauermörtel.

15. Verwendung nach einem der Ansprüche 14 oder 15 zur Verringerung der Rohdichte der Zubereitung und/oder Verbesserung der Verarbeitbarkeit.
